# EUROPÄISCHE PATENTSCHRIFT

(11) **EP 0 773 198 B1**
(45) Veröffentlichungstag und Bekanntmachung des Hinweises auf die Patenterteilung: **14.06.2000**
(21) Anmeldenummer: 96117714.4
(22) Anmeldetag: 06.11.1996
(51) Int. Cl.: C04B 28/02

(54) **Verdickersystem für Baustoffgemische**
Thickening system for building material mixtures
Système épaississant pour mélanges pour matériaux de construction

(30) Priorität: 10.11.1995 DE 19541945
(43) Veröffentlichungstag der Anmeldung: 14.05.1997
(73) Patentinhaber: Clariant GmbH, 65929 Frankfurt am Main (DE)
(72) Erfinder: Mann, Heinz-Josef, 55291 Saulheim (DE)

(56) Entgegenhaltungen:
- EP-A- 0 227 876
- WO-A-93/08230
- DE-A- 3 105 576
- DE-A- 3 243 573
- DE-A- 3 920 025
- DE-A- 4 331 141
- US-A- 4 654 085
- DATABASE WPI Week 8942 Derwent Publications Ltd., London, GB; AN 89-304165 XP002025796 & JP 01 224 041 A (MIZUSAWA CHEMICAL IND KK) , 7.September 1989
- CHEMICAL ABSTRACTS, vol. 105, no. 4, 28.Juli 1986 Columbus, Ohio, US; abstract no. 28877b, K.KUBOTA ET AL: Seite 303; XP002025795 & JP 61 072 663 A (ID.)

## Beschreibung

Die vorliegende Erfindung betrifft ein Polyacrylamid-freies Verdickersystem, Verfahren zu dessen Herstellung sowie dessen Verwendung in Baustoffgemischen.

Dünnbettklebemörtel und Spachtelmassen enthalten als Hauptkomponenten Bindemittel und Füllstoffe. Die gebräuchlichsten Bindemittel sind Zement und Gips, während die Füllstoffe überwiegend aus Quarz- und/oder Carbonat-haltigen Rohstoffen aufgebaut sind. Weitere wichtige Bestandteile sind Zusatzmittel, die in geringen Mengen zur Verbesserung der Verarbeitungseigenschaften zugegeben werden und dabei wichtige Funtionen übernehmen. Die Zugabe von Celluloseethern verändert die Verarbeitungseigenschaften solcher Baustoffgemische. Die Verdickungswirkung (Konsistenz) und das Wasserrückhaltevermögen werden erhöht, die Haftung zum Untergrund wird deutlich verbessert. Zur Verbesserung der Standfestigkeit werden die Celluloseether noch mit zusätzlichen Verdickern modifiziert. Die wichtigsten Modifizierungsmittel sind Polyacrylamide, deren Einsatz beispielsweise in DE-A 12 83 726 und US-A 4 021 257 beschrieben ist. Während Celluloseether die Haftung verbessern, wird durch die Zugabe von Polyacrylamiden dieser Effekt jedoch teilweise kompensiert.

Celluloseether wirken verdickend, erhöhen also die Konsistenz wasserhaltiger Zubereitungen. Unter Scherbeanspruchung, wenn beispielsweise bei Fliesenklebern die Fliesen eingeschoben werden, baut die Konsistenz jedoch deutlich ab, so daß die Fliesen abrutschen. Durch die Zugabe von Polyacrylamiden wird die konsistenzerhöhende Wirkung des Celluloseethers deutlich erhöht und der Konsistenzabbau unter Scherbeanspruchung erheblich verringert, so daß die Fliesen nicht abrutschen. Ein weiterer wichtiger Vorteil der Polyacrylamide ist der sehr rasche Konsistenzaufbau, der je nach verwendetem Polyacrylamid in weniger als 30 Sekunden abgeschlossen ist. Ungünstige Nachverdickungseigenschaften werden bei Polyacrylamiden nicht beobachtet. Aufgrund der sehr komplexen Wirkungsweise von Polyacrylamiden gestaltet sich die Substitution dieser Produkte äußerst schwierig.

In der Patentanmeldung EP-A 0 458 328 wird ein Verdicker-System beschrieben, bei dem auf die Zugabe von Polyacrylamiden verzichtet worden ist. Im Gegensatz zu Polyacrylamid-haltigen Verdickersystemen ist der Konsistenzaufbau deutlich verlangsamt, so daß die damit angesetzten Baustoffgemische nach der Anrührphase noch nachverdicken.

Die DE-A 30 18 764 beschreibt eine Tapetenrückseitenbeschichtung, die neben wasserlöslichen Celluloseethern bzw. Stärkeethern Polyacrylamide oder andere Hydrokolloide enthält. Als Trennmittel werden zusätzlich Erdalkaliseifen, Kieselsäure oder Aluminiumsilikat zugesetzt. Die in allen Beispielen in DE-A 30 18 764 beschriebenen Formulierungen können nicht auf den Zusatz von Polyacrylamid verzichten.

Die Aufgabe der vorliegenden Erfindung bestand darin, ein Verdickersystem zur Verfügung zu stellen, das ohne Polyacrylamid auskommt, einen schnellen Konsistenzaufbau und eine möglichst geringe Nachverdickung aufweist.

Überraschend wurde gefunden, daß mit einer Polyacrylamid-freien Kombination aus Celluloseethern, Stärkeethern und Schichtsilikaten ein Verdickersystem erhalten wird, das die gestellte Aufgabe erfüllt.

Gegenstand der Erfindung ist ein Polyacrylamid-freies Verdickersystem, enthaltend mindestens einen Celluloseether, mindestens einen Stärkeether und mindestens ein Schichtsilikat.

Als Celluloseether geeignet sind beispielsweise handelsübliche, nichtionogene, wasserlösliche Celluloseether, vorzugsweise Methylcellulose, Methylhydroxyethylcellulose, Methylhydroxypropylcellulose, Hydroxyethylcellulose sowie deren hydrophob substituierten Derivate und Ethylhydroxyethylcellulose, insbesondere Methylcellulose mit einem durchschnittlichen Substitutionsgrad (DS) von 1,4 bis 2,6, Methylhydroxyethylcellulose mit einem molaren Substitutionsgrad (MS) von 0,03 bis 0,7 und einem DS von 1,3 bis 2,6 und Methylhydroxypropylcellulose mit einem MS von 0,05 bis 1,3 und einem DS von 1,3 bis 2,6.

Der Anteil der Celluloseether beträgt vorzugsweise 15 bis 50 Gew.-%, insbesondere 20 bis 40 Gew.-%, bezogen auf das trockene Verdickersystem.

Als Stärkeether sind beispielsweise die handelsüblichen Stärkeether geeignet, vorzugsweise Hydroxypropylstärkeether, Hydroxyethylstärkeether, Carboxymethylstärkeether, insbesondere Hydroxypropylstärkeether.

Der Anteil der Stärkeether beträgt vorzugsweise 5 bis 20 Gew.-%, insbesondere 7 bis 15 Gew.-%, bezogen auf das trockene Verdickersystem.

Als Schichtsilikate kommen sowohl natürliche als auch synthetische Produkte sowie Abmischungen untereinander infrage, vorzugsweise Bentonit, Hectorit, Smektit, Sepiolith, insbesondere natürliches wasserhaltiges Magnesiumsilikat der Formel Si₁₂Mg₈O₃₀(OH)₄ · 8H₂O.

Der Anteil der Schichtsilikate beträgt vorzugsweise 30 bis 80, insbesondere 40 bis 75 Gew.-%, besonders bevorzugt 50 bis 70 Gew.-%, bezogen auf das trockene Verdickersystem.

Im erfindungsgemäßen Verdickersystem können auch übliche Verdickerkomponenten wie Polysaccharide, beispielsweise Agar, Guar, Guarether, Johannisbrotkernmehl und Xanthane enthalten sein. Diese Verbindungen können in einer Menge bis zu 30 Gew.-%, vorzugsweise 5 bis 20 Gew.-%, bezogen auf das trockene Verdickersystem, vorhanden sein. Das erfindungsgemäße Verdickersystem kann weitere Zusatzstoffe wie Abbindeverzögerer aus der Gruppe Zitronensäure und deren Salze, Phosphonsäuren und Phosphate, vorzugsweise Oligo- und Polyphosphate enthalten.

Der Anteil der Abbindeverzögerer beträgt vorzugsweise 0,01 bis 1 Gew.-%, insbesondere 0,05 bis 0,5 Gew.-%, bezogen auf das trockene Verdickersystem.

Gegenstand der Erfindung ist auch ein Verfahren zur Herstellung des Polyacrylamid-freien Verdickersystems durch Mischen von mindestens einem Celluloseether, mindestens einem Stärkeether und mindestens einem Schichtsilikat sowie gegebenenfalls von weiteren Zusatzstoffen.

Das erfindungsgemäße Verdickersystem zeigt ein sehr gutes Verdickungsverhalten, wie man es sonst nur von Polyacrylamid enthaltenden Verdickern kennt. Der starke Verdickungseffekt tritt bei dem erfindungsgemäßen System vorzugsweise bei einem pH-Wert > 7, insbesondere 9 bis 14, auf.

Das erfindungsgemäße System zeigt noch eine zweite Verbesserung gegenüber dem Stand der Technik. Bei der Zugabe von Zementverzögerern, vorzugsweise Phosphat-Verzögerern kann bei Dünnbettklebern die klebeoffene Zeit verlängert werden. Die Zugabe von Verzögerern führt bei üblichen Verdickern im allgemeinen zu einer deutlichen Verringerung der Haftzugfestigkeiten. Bei der erfindungsgemäßen Verdickerkombination wird bei Hinzugabe von Zementverzögerern die klebeoffene Zeit erheblich verlängert, ohne daß ein Abfall bei den Haftzugfestigkeiten festgestellt wird.

Gegenstand der Erfindung ist ferner die Verwendung des Polyacrylamid-freien Verdickersystems in Baustoffgemischen, vorzugsweise in Fliesenklebern, Spachtelmassen, Putzen und Anstrichmitteln, insbesondere in Zementfliesenklebern und Gipsspachtelmassen.

### Beispiele

### Prüfgemisch: Fliesenkleber

| Zusammensetzung des Fliesenklebergrundgemisches | |
|---|---|
| **Komponenten** | **Gewichtsteile** |
| Zement CEM I 42,5 R | 400 |
| Quarzsand < 0,5 mm | 585 |
| ®Mowilith LDM 1140 P (Vinylacetat-Ethylen-Copolymer) | 15 |

Zum Vergleich wurde ein anionisches Polyacrylamid verwendet, dessen Molmasse > 10⁶ g/mol, dessen Kornfeinheit < 1 mm und dessen Stickstoffgehalt ca. 9 Gew.-% betrug.

### Bewertungskriterien

### Verdickungsbeginn:

Wasser und Fliesenkleber wurden in einen 500 ml-Metallbecher vorgelegt (Wasserfaktor 0,3). Anschließend wurde die Masse mit einem Kunststoffstab angerührt, bis ein deutlicher Rührwiderstand feststellbar war. Der Zeitraum zwischen Anrührbeginn und deutlicher Verdickung wird als Verdickungsbeginn angegeben.

### Fliesenstandfestigkeit:

Der von Hand bis zum Verdickungsbeginn angerührte Kleber wurde nach einer Reifezeit von 5 Minuten, 30 Sekunden mit einem Küchenrührer auf Rührstufe III durchgeschlagen. Anschließend wurde der Kleber mit einer 6 mm-Zahnkelle auf eine Betonplatte aufgekämmt. Man legte eine Fliese mit einem Flächengewicht von 5 g/cm² auf das Kleberbett und belastet diese 30 Sekunden mit einem Gewicht von 5 kg. In dieser Zeit wurde an der Fliesenoberkante mit einem Spatel ein Strich durch das Kleberbett gezogen. Nach dem Entfernen des Gewichtes wurde die Betonplatte senkrecht gestellt. Zehn Minuten später wurde der Abstand zwischen Fliesenoberkante und der Markierung gemessen und als Abrutschwert in mm angegeben.

### Haftzugfestigkeiten:

Die Bestimmung erfolgte nach DIN 18156.

### Versuchsgemische

**Tabelle 1**

| Zusammensetzung der Fliesenkleber (in Gewichtsteilen) | | | | | | | | |
|---|---|---|---|---|---|---|---|---|
| **Beispielmischung** | **V A** | **V B** | **V C** | **D** | **E** | **F** | **G** | **H** |
| Fliesenklebergrundgemisch | 1000 | 1000 | 1000 | 1000 | 1000 | 1000 | 1000 | 1000 |
| ®Tylose MH 2000 (Methyl-hydroxyethylcellulose, Viskosität (nach Höppler, 1,9 %ige wäßrige Lösung): 2000 mPa·s, Hoechst AG) | 6 | 4,74 | 3,6 | 4,8 | 4,8 | 4,8 | 4,8 | 4,8 |
| Hydroxypropylstärke | - | 0,9 | - | 1,2 | 1,2 | 1,2 | 1,2 | 1,2 |
| Polyacrylamid | - | 0,36 | - | - | - | - | - | - |
| Polyvinylalkohol | - | - | 1,2 | - | - | - | - | - |
| Borsäure | - | - | 1,2 | - | - | - | - | - |
| Synthetischer Hektorit | - | - | - | 10 | - | - | - | - |
| Mischung aus Calcium-Metasilikat mit Magnesium-Al-Schichtsilikat | - | - | - | - | 10 | - | - | - |
| Natürliches Magnesiumsilikat (Si₁₂Mg₈O₃₀(OH)₄·8H₂O) | 10 | - | - | - | - | 10 | - | - |
| Modifizierter Smektit | - | - | - | - | - | - | 10 | - |
| Alkalisch aktivierter Bentonit | - | - | - | - | - | - | - | 10 |

**Tabelle 2**

| Eigenschaften der Fliesenkleber | | | | | | | | | |
|---|---|---|---|---|---|---|---|---|---|
| **Beispielmischung** | | **V A** | **V B** | **V C** | **D** | **E** | **F** | **G** | **H** |
| Wasserfaktor | | 0,3 | 0,3 | 0,3 | 0,3 | 0,3 | 0,3 | 0,3 | 0,3 |
| Verdickungsbeginn [s] | | 15 | 8 | 47 | 22 | 18 | 6 | 31 | 33 |
| Abrutschen [mm] | | total | 2-3 | 14 | 23 | 20 | 0-1 | 25 | 25 |
| 5 g/cm²-Fliese | | | | | | | | | |

| Haftzugfestigkeit [N/mm²] | | | | | | | | | |
|---|---|---|---|---|---|---|---|---|---|
| Normal | Steingut | 1,0 | 1,1 | | | | 1,1 | | |
| | Steinzeug | 0,95 | 0,7 | | | | 1,1 | | |
| Naß | Steingut | 1,25 | 1,4 | | | | 1,1 | | |
| | Steinzeug | 1,1 | 0,85 | | | | 1,1 | | |
| Korrigierung | Steingut | 0,9 | 1,0 | 1,4 | 1,2 | 1,35 | 1,65 | 1,4 | 1,7 |
| Warm | Steingut | 1,05 | 1,1 | | | | 1,1 | | |
| Frost-Tau | Steingut | 1,15 | 0,8 | | | | 1,05 | | |

Aus dem Abrutschverhalten wird deutlich, daß mit einer Abmischung aus einem natürlichen Magnesiumsilikat und Cellulose- und Stärkeether (F) vergleichbar gute Fliesenstandfestigkeiten erreicht werden wie in Polyacrylamid-haltigen Abmischungen (V B). Der Synergismus zwischen dem Schichtsilikat und dem Stärkeether wird aus dem Vergleich von (V A) mit (F) ersichtlich.

Zur Bestimmung der klebeoffenen Zeit wurde zunächst der angemischte Kleber mit einer 6 mm-Zahnkelle im Winkel von 60° zum Untergrund auf eine Betonplatte aufgekämmt. Im Abstand von 5 Minuten wurde eine Steingutfliese von 50 x 50 mm auf den Kleber gegeben und 30 Sekunden mit einem Gewicht von 10 N belastet. Anschließend wird das Gewicht entfernt, die Fliese aus dem Kleberbett entnommen und die anhaftende Klebermenge auf der Rückseite visuell bewertet. Wenn weniger als 50 % der Fliesenrückseite benetzt waren, war das Ende der klebeoffenen Zeit erreicht.

**Tabelle 3**

| Einfluß des Verzögerers | | | | | |
|---|---|---|---|---|---|
| **Beispielmischung** | | **V B** | **V B******* | **F** | **F******* |
| ®Targon 43 (Phosphat-Abbindeverzögerer, BK Ladenburg) [Gew.-%] | | - | 0,1 | - | 0,1 |
| Klebeoffene Zeit [min] | | 10 | 20 | 10-15 | 20 |

| Haftzugfestigkeit (N/mm²) | | | | | |
|---|---|---|---|---|---|
| Normal | Steingut | 1,1 | 0,7 | 1,1 | 1,15 |
| | Steinzeug | 0,7 | 0,55 | 1,1 | 0,9 |
| Naß | Steingut | 1,4 | 0,95 | 1,1 | 0,9 |
| | Steinzeug | 0,85 | 0,7 | 1,65 | 1,3 |
| Korrigierung | Steingut | 1,0 | 0,35 | 1,15 | 1,1 |
| Warm | Steingut | 1,1 | 0,65 | 1,1 | 0,9 |
| Frost-Tau | Steinzeug | 0,8 | 0,55 | 1,05 | 0,95 |

| | | | | | |
|---|---|---|---|---|---|
| * Rezepturen mit zusätzlichem Abbindeverzögerer | | | | | |

Der Vergleich (F*) mit (V B*) zeigt, daß bei vergleichbar verlängerter klebeoffener Zeit die erhaltenen Haftzugfestigkeiten bei (F*) deutlich höher sind als bei (VB*).

Anhand einer Gipsspachtelmasse läßt sich der Einfluß des pH-Wertes darstellen. Hierzu wurden folgende Versuche durchgeführt:

**Tabelle 4**

| Zusammensetzung der Gipsspachtelmasse (in Gewichtsteilen) | | | | | | |
|---|---|---|---|---|---|---|
| **Beispielmischung** | **I** | **II** | **III** | **IV** | **V** | **VI** |
| Modellgips | 100 | 10 | 10 | 100 | 990 | 990 |
| (verzögert) | 0 | 00 | 00 | 0 | | |
| Kalkhydrat | - | - | - | - | 10 | 10 |
| Tylose P 10000 (Methylhydroxyethylcellulose Viskosität (nach Höppler, 1,9 %ige wäßrige Lösung): 10.000 mPa·s, Hoechst AG) + Polyacrylamid | 6 | - | - | - | - | - |
| Tylose P 10000 | - | 6 | 5 | 5 | 5 | 6 |
| Hydroxypropylstärke | - | - | 1 | 1 | 1 | - |
| Wasserhaltiges Magnesiumsilikat | - | - | - | 10 | 10 | 10 |

Die Mischungen wurden mit Wasser von Hand mit einem Rührstab angerührt. Bestimmt wurde der Zeitpunkt bis zum Verdickungsbeginn und die Verdickungshöhe. Letztere wurde in stark, mittel und gering unterteilt.

### Ergebnisse

| | **I** | **II** | **III** | **IV** | **V** | **VI** |
|---|---|---|---|---|---|---|
| Verdickungsbeginn [s] | 23 | > 45 | > 45 | > 45 | 15 | 35 |
| Verdickungshöhe | stark | gering | gering | mittel | stark | mittel |

Der Vergleich von IV mit V zeigt, daß durch die Zugabe von Alkali, in diesem Fall Kalkhydrat, die erfindungsgemäße Verdickerkombination besonders wirksam wird. Die Versuche I und V zeigen etwa vergleichbare Verdickerwirkung. Aus dem Vergleich von V mit VI geht ein synergistischer Effekt der erfindungsgemäßen Kombination aus Celluloseether, Stärkeether und Schichtsilikat hervor.

## Patentansprüche

1. Polyacrylamid-freies Verdickersystem, enthaltend mindestens einen Celluloseether, mindestens einen Stärkeether und mindestens ein Schichtsilikat.

2. Verdickersystem nach Anspruch 1, dadurch gekennzeichnet, daß ein Celluloseether aus der Gruppe Methylcellulose (MC), Methylhydroxyethylcellulose (MHEC) oder Methylhydroxypropylcellulose (MHPC) enthalten ist.

3. Verdickersystem nach Anspruch 1, dadurch gekennzeichnet, daß als Stärkeether Hydroxypropylstärke enthalten ist.

4. Verdickersystem nach Anspruch 1, dadurch gekennzeichnet, daß als Schichtsilikat natürliches Magnesiumsilikat der Formel Si₁₂Mg₈O₃₀(OH)₄ · 8 H₂O enthalten ist.

5. Verdickersystem nach Anspruch 1, dadurch gekennzeichnet, daß es zusätzlich einen Abbindeverzögerer aus der Gruppe Zitronensäure und deren Salze, Polysaccharide, Phosphonsäuren und Phosphate, vorzugsweise Oligo- und Polyphosphate enthält.

6. Verdickersystem nach Anspruch 1, dadurch gekennzeichnet, daß es 15 bis 50 Gew.-% Celluloseether, 5 bis 20 Gew.-% Stärkeether und 30 bis 80 Gew.-% Schichtsilikat, jeweils bezogen auf das trockene Verdickersystem, enthält.

7. Verfahren zur Herstellung eines Acrylamid-freien Verdickersystems nach Anspruch 1 durch Mischen von mindestens einem Celluloseether, mindestens einem Stärkeether und mindestens einem Schichtsilikat sowie gegebenenfalls von weiteren Zusatzstoffen.

8. Verwendung eines Acrylamid-freien Verdickersystems nach Anspruch 1 in Baustoffgemischen.

9. Verwendung eines Acrylamid-freien Verdickersystems nach Anspruch 1 in Zementfliesenklebern.

10. Verwendung eines Acrylamid-freien Verdickersystems nach Anspruch 1 in Gipsspachtelmassen.

## Claims

1. A polyacrylamide-free thickener system comprising at least one cellulose ether, at least one starch ether and at least one sheet silicate.

2. A thickener system as claimed in claim 1, wherein a cellulose ether selected from the group consisting of methylcellulose (MC), methylhydroxyethylcellulose (MHEC) and methylhydroxypropylcellulose (MHPC) is present.

3. A thickener system as claimed in claim 1, wherein hydroxypropylstarch is present as starch ether.

4. A thickener system as claimed in claim 1, wherein natural magnesium silicate of the formula Si₁₂Mg₈O₃₀(OH)₄·8H₂O is present as sheet silicate.

5. A thickener system as claimed in claim 1 additionally containing a setting retarder selected from the group consisting of citric acid and its salts, polysaccharides, phosphonic acids and phosphates, preferably oligophosphates and polyphosphates.

6. A thickener system as claimed in claim 1 comprising from 15 to 50% by weight of cellulose ether, from 5 to 20% by weight of starch ether and from 30 to 80% by weight of sheet silicate, in each case based on the dry thickener system.

7. A process for preparing an acrylamide-free thickener system as claimed in claim 1 by mixing at least one cellulose ether, at least one starch ether and at least one sheet silicate and also, if desired, further additives.

8. Use of an acrylamide-free thickener system as claimed in claim 1 in building material mixtures.

9. Use of an acrylamide-free thickener system as claimed in claim 1 in cement adhesives for tiles.

10. Use of an acrylamide-free thickener system as claimed in claim 1 in gypsum-based filling compounds.

## Revendications

1. Système épaississant exempt de polyacrylamide, contenant au moins un éther de cellulose, au moins un éther d'amidon et au moins un silicate lamellaire.

2. Système épaississant selon la revendication 1, caractérisé en ce qu'il contient un éther de cellulose choisi parmi la méthylcellulose (MC), la méthylhydroxyéthylcellulose (MHEC) ou la méthylhydroxypropylcellulose (MHPC).

3. Système épaississant selon la revendication 1, caractérisé en ce qu'il contient comme éther d'amidon l'hydroxypropylamidon.

4. Système épaississant selon la revendication 1, caractérisé en ce qu'il contient comme silicate lamellaire du silicate de magnésium naturel de formule Si₁₂Mg₈O₃₀(OH)₄·8H₂O.

5. Système épaississant selon la revendication 1, caractérisé en ce qu'il contient en plus un retardateur de prise choisi parmi l'acide citrique et ses sels, les polysaccharides, les acides phosphoniques et les phosphates, de préférence les oligo- et polyphosphates.

6. Système épaississant selon la revendication 1, caractérisé en ce qu'il contient de 15 à 50% en poids d'éther de cellulose, de 5 à 20% en poids d'éther d'amidon et de 30 à 80% en poids de silicate lamellaire, respectivement par rapport au système épaississant sec.

7. Procédé pour la préparation d'un système épaississant exempt d'acrylamide selon la revendication 1 par mélange d'au moins un éther de cellulose, d'au moins un éther d'amidon et d'au moins un silicàte lamellaire ainsi qu'éventuellement d'autres additifs.

8. Utilisation d'un système épaississant exempt d'acrylamide selon la revendication 1 dans des compositions de matériaux de construction.

9. Utilisation d'un système épaississant exempt d'acrylamide selon la revendication 1 dans des colles de carrelage en ciment.

10. Utilisation d'un système épaississant exempt d'acrylamide selon la revendication 1 dans des mastics bouche-pores en gypse.
